# EUROPÄISCHE PATENTSCHRIFT

(11) **EP 3 372 294 B1**
(45) Veröffentlichungstag und Bekanntmachung des Hinweises auf die Patenterteilung: **28.04.2021**
(21) Anmeldenummer: 17159367.6
(22) Anmeldetag: 06.03.2017
(51) Int. Cl.: B01D 46/00, B01D 46/10, B01D 53/04, B01D 46/52, B60H 3/06

(54) **FILTERANORDNUNG FÜR EINE MOBILE EINRICHTUNG**
FILTER ASSEMBLY FOR A MOBILE DEVICE
SYSTÈME DE FILTRE POUR UN DISPOSITIF MOBILE

(43) Veröffentlichungstag der Anmeldung: 12.09.2018
(73) Patentinhaber: Carl Freudenberg KG, 69469 Weinheim (DE)
(72) Erfinder: Scholz, Tobias, 68519 Viernheim (DE); Kurtz, Oliver, 69231 Rauenberg (DE); Stahl, Ulrich, 69514 Laudenbach (DE); Arnold, Anette, 64342 Seeheim-Jugenheim (DE); Bräunling, Volker, 64646 Heppenheim (DE)

(56) Entgegenhaltungen:
- EP-A1- 3 081 909
- DE-A1-102005 031 182
- JP-A- S5 632 072
- JP-A- 2001 070 420
- US-A1- 2003 066 427
- US-A1- 2008 168 902

## Beschreibung

Die Erfindung betrifft eine Filteranordnung für eine mobile Einrichtung, umfassend zumindest ein erstes Filterelement und ein zweites Filterelement, welche in einer Luftführung der mobilen Einrichtung angeordnet sind, wobei das erste Filterelement als Faltenfilter und das zweite Filterelement als Adsorptionsfilter ausgebildet sind.

Es ist bekannt, Filteranordnungen zur Aufbereitung der Kabinenluft von Kraftfahrzeugen einzusetzen. Aus der EP 3 015 155 A1 ist eine Filteranordnung bekannt, bei welchem die Filteraufgaben Adsorptionsfiltration und Partikelfiltration in einem Filter zusammengefasst sind. Dabei hält die als Partikelfilter ausgebildete Filterlage partikelförmige Bestandteile aus der Zuluft zurück, beispielsweise Staub und Pollen. Die als Adsorptionsfilter ausgebildete Filterlage hält unerwünschte gasförmige Bestandteile aus der Zuluft zurück, beispielsweise Schadgase, Gerüche, Benzol oder Ozon.

Bei der Ausgestaltung des Filterelementes als Innenraumfilter für mobile Einrichtungen wurden somit die Filterfunktionen bislang in einem einzigen Bauteil kombiniert. Hierbei ist nachteilig, dass lediglich Filterfunktionen kombiniert werden können, welche bauartbedingt in einem einzigen Filterelement angeordnet werden können

Kombinationen aus einem Faltenfilter und einem Adsorptionsfilter in der Form eines Wabenfilters sind in JP 2001070420 A, US 2003/066427 A1 und US 2008/0168902 A1 offenbart.

Der Erfindung liegt die Aufgabe zugrunde, eine Filteranordnung für eine mobile Einrichtung bereitzustellen, welche eine optimale Abstimmung verschiedener Filterelemente auf verschiedene Filtrationsaufgaben ermöglicht.

Diese Aufgabe wird mit den Merkmalen von Anspruch 1 gelöst. Auf vorteilhafte Ausgestaltungen nehmen die Unteransprüche Bezug.

Zur Lösung der Aufgabe sind das erste Filterelement und das zweite Filterelement separat voneinander ausgebildet und beabstandet voneinander in der Luftführung montiert. Dadurch ergibt sich eine Funktionstrennung von erstem Filterelement und zweitem Filterelement, so dass beide Filterelemente unabhängig voneinander ausgestaltet sein können. Dabei ist insbesondere nicht erforderlich, das zweite als Adsorptionsfilter ausgebildete Filterelement so auszugestalten, dass dieses mit dem als Partikelfilter in Form eines Faltenfilters ausgebildeten ersten Filterelement in einem einzigen Filterelement kombinierbar ist. Insofern kann das zweite Filterelement so ausgestaltet sein, dass es bei geringem Druckverlust eine hohe Filtrationsleistung des durchgeführten Luftstromes ermöglicht.

Das erste Filterelement ist dabei als Faltenfilter ausgebildet, umfassend zumindest eine Lage aus einem Vliesstoff. Aus Vliesstoff ausgebildete Faltenfilter sind kostengünstig und weisen aufgrund der verhältnismäßig großen Filteroberfläche eine hohe Filtrationsleistung auf.

Das zweite Filterelement ist erfindungsgemäß als Wabenfilter ausgebildet, umfassend eine Vielzahl von Kanälen, welche durch Kanalwände begrenzt sind. Ein derartiger Filter weist einen besonders niedrigen Luftwiderstand auf. Gleichzeitig ergibt sich durch die Vielzahl von Kanälen, begrenzt durch Kanalwände, eine hohe Filtrationsoberfläche, welche eine besonders hohe Gasfiltrationsleistung bewirkt. Ein Wabenfilter kann hinsichtlich des gewünschten Luftwiderstands und der gewünschten Gasadsorptionsleistung besonders gut anwendungsspezifisch eingestellt werden. Hierzu können die Außenabmessungen, die Länge und Anzahl der Kanäle sowie die Querschnittsfläche der Kanäle modifiziert werden.

Der Wabenfilter kann segmentweise ausgebildet sein, wobei mehrere Segmente in Form von Wabenkörpern in einem Halterahmen gehalten und zu einem Wabenfilter zusammengesetzt sind.

Das zweite Filterelement kann Aktivkohle umfassen. Dabei kann das zweite Filterelement vollständig aus Aktivkohle gebildet sein. Alternativ ist es auch denkbar, Aktivkohle mit anderen sorptionsfähigen Materialien zu mischen. Denkbar ist hier insbesondere der Einsatz von Kieselsäure. Aktivkohle bzw. Mischungen aus Aktivkohle und Kieselsäure werden mit einem Bindemittel vermischt und zu einem Wabenfilter geformt. Derartige Filter weisen eine hohe Filtrationsleistung zum Entfernen unerwünschter gasförmiger Bestandteile auf. Ein vorteilhafter Wabenkörper bzw. Wabenfilter umfasst mindestens 55 Gew.% Aktivkohle. Des Weiteren kann der Wabenfilter Begleitstoffe enthalten. Vorteilhafte Begleitstoffe sind beispielsweise Glaskohlenstoff und/oder Alumosilikat. Die Zelldichte des Wabenkörpers, also die Anzahl der Kanäle je Flächeneinheit, beträgt vorzugsweise zwischen 10 und 120 Zellen/cm², besonders bevorzugt zwischen 40 und 95 Zellen/cm².

Die Luftführung weist einen Ausströmer auf wobei das zweite Filterelement dem Ausströmer zugeordnet ist. Hierbei ist vorteilhaft, dass gasförmige Bestandteile, welche zu einer Geruchsbelästigung führen können, unmittelbar vor dem Ausströmer entfernt werden können, so dass auch gasförmige Bestandteile entfernt werden, die erst innerhalb der mobilen Einrichtung emittiert werden.

Das zweite Filterelement kann einen Strömungsgleichrichter bilden. Insbesondere bei der Ausbildung des zweiten Filterelementes als Wabenfilter ergibt sich eine Vergleichmäßigung der Zuluft, wenn diese die verhältnismäßig langen Kanäle des Wabenfilters passiert. Durch die Gleichrichtung der Strömung reduzieren sich Geräusche, so dass Geräuschemissionen der Zuluftführung reduziert werden.

Das zweite Filterelement bildet mit dem Ausströmer eine funktionstechnische Einheit Ferner kann das zweite Filterelement in schwer erreichbare Räume der Zuluftführung montiert werden. Insbesondere entfällt eine Demontage des Ausströmers, um das zweite Filterelement auszutauschen. Bei dieser Ausgestaltung kann das zweite Filterelement für die komplette Lebensdauer der mobilen Einrichtung ausgelegt sein, so dass ein Austausch des zweiten Filterelementes entfallen kann.

Eine Luftführung mit einer erfindungsgemäßen Filteranordnung für mobile Einrichtungen umfasst eine Klimatisierungseinrichtung, eine Luftfördereinheit und eine Filteranordnung, wobei Filterelemente der Filteranordnung in Strömungsrichtung betrachtet einzeln oder gruppenweise vor und/oder hinter der Luftfördereinheit angeordnet sein können. Bei dieser Ausgestaltung ist vorteilhaft, dass in der Zuluft transportierte Partikel wie Staub und Pollen durch das erste Filterelement zurückgehalten werden. Ein weiteres Filterelement entfernt gasförmige Bestandteile aus der Zuluft. Darunter fallen auch gasförmige Bestandteile, welche von der Luftfördereinheit emittiert werden. Dies kann beispielsweise durch den Elektromotor der Luftfördereinheit erzeugtes Ozon sein.

Bei einer vorteilhaften Luftführung ist ein erstes Filterelement in Strömungsrichtung betrachtet vor der Luftfördereinheit angeordnet und ein zweites Filterelement ist hinter der Luftfördereinheit angeordnet. Dabei ist das erste Filterelement als Partikelfilter ausgebildet und das zweite Filterelement als Adsorptionsfilter.

Die Luftführung kann eine erste Luftführung für die Zuluft und eine zweite Luftführung für die Umluft aufweisen. Dabei können für jede Luftführung einzelne oder mehrere separate Filterelemente vorgesehen sein. Darüber hinaus können Filterelemente vorgesehen sein, die eine Filtration gleichzeitig für beide Luftführungen durchführen. Bei der Filtrierung der Umluft ist insbesondere das Entfernen von aus dem Innenraum der mobilen Einrichtung emittierten Substanzen relevant, während bei der Filtrierung der Zuluft darüber hinaus das Entfernen von Schadgasen gewünscht ist. Daher sind in einer vorteilhaften Ausgestaltung in Bezug auf das zweite Filterelement unterschiedliche Filterelemente für die Zuluft und die Umluft vorgesehen.

Eine besonders effektive Abscheidung sowohl von Partikeln als auch von Schadgasen ergibt sich bei einer Kombination eines ersten Filterelementes in Form eines Faltenfilters mit einem separat ausgebildeten zweiten Filterelement in Form eines Wabenfilters.

In einer alternativen Ausgestaltung kann das erste Filterelement als Vorfilter ausgebildet sein und zwischen dem ersten Filterelement und dem zweiten Filterelement kann ein drittes Filterelement angeordnet sein. Dabei kann ein erstes Filterelement als Grobfilter, ein zweites Filterelement als Adsorptionsfilter und ein drittes Filterelement als Feinfilter ausgebildet sein. Bei dieser Ausgestaltung werden mit der Zuluft geführte Partikel von dem als Grobfilter ausgebildeten Filterelement zurückgehalten. Feinere Partikel, insbesondere auch solche, die erst innerhalb der Zuluftführung der mobilen Einrichtung entstehen, werden durch das als Feinfilter ausgebildete Filterelement, vorzugsweise dem dritten Filterelement zurückgehalten. Unerwünschte gasförmige Begleitstoffe werden von dem zweiten Filterelement zurückgehalten.

Einige Ausgestaltungen der erfindungsgemäßen Filteranordnung und der erfindungsgemäßen Klimatisierungseinheit werden nachfolgend anhand der Figuren näher erläutert. Diese zeigen, jeweils schematisch:
- Fig. 1: eine Filteranordnung;
- Fig. 2: eine Filteranordnung für eine mobile Einrichtung mit einer Klimatisierungseinheit.

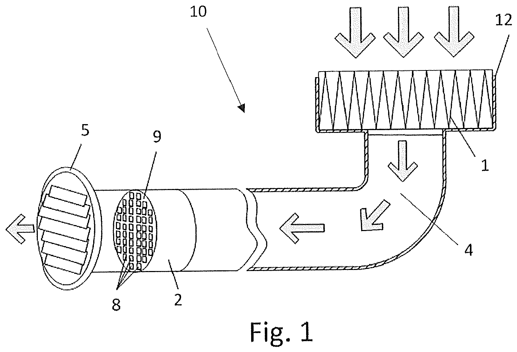

Figur 1 zeigt eine Filteranordnung 10 für eine mobile Einrichtung, umfassend zumindest ein erstes Filterelement 1 und ein zweites Filterelement 2, welche in einer Luftführung 4 der mobilen Einrichtung angeordnet sind.

Das erste Filterelement 1 ist als Partikelfilter ausgebildet. Dabei ist das erste Filterelement 1 ein Faltenfilter, umfassend zumindest eine Lage aus einem Vliesstoff. Das erste Filterelement 1 ist austauschbar in einem Filtergehäuse 12 angeordnet, welches Teil der Luftführung 4 ist.

Das zweite Filterelement 2 ist als Adsorptionsfilter ausgebildet. Das zweite Filterelement 2 ist als Wabenfilter ausgebildet. Der Wabenfilter umfasst einen oder mehrere Wabenkörper, welcher eine Vielzahl von Kanälen 8 aufweist, welche durch Kanalwände 9 begrenzt sind. Der vorliegende Wabenfilter ist aus mehreren Wabenkörpern segmentartig zusammengesetzt. Die Wabenkörper sind in einem Halterahmen fixiert, wobei der Halterahmen so ausgebildet ist, dass er eine Dichtfläche gegenüber dem Filtergehäuse bildet. In einer alternativen Ausgestaltung können die Wabenkörper durch stoffschlüssige Verbindungen miteinander zu einem Wabenfilter zusammengesetzt werden. Darüber hinaus kann die Dichtfläche in der Luftführung 4 vorgesehen sein.

Bei der vorliegenden Ausgestaltung umfasst das zweite Filterelement 2 Aktivkohle. Zur Herstellung wird Aktivkohle mittels Extrusion in die wabenförmige Gestalt gebracht. Das zweite Filterelement 2 ist zylinderförmig ausgebildet und als Insert in die rohrförmige Luftführung eingesetzt.

In einer vorteilhaften Ausgestaltung ist der Halterahmen rohrförmig ausgebildet und in der rohrförmigen Luftführung einer Klimatisierungseinheit, insbesondere einer mobilen Klimatisierungseinheit angeordnet. Dabei weist die Luftführung häufig einen runden oder rechteckigen Querschnitt auf, so dass der Halterahmen entsprechend rund oder rechteckig ausgestaltet ist.

Die Wabenkörper der vorliegenden Ausgestaltung bestehen zu 65% aus Aktivkohle und zu 35% aus Begleitstoffen, wobei ein Begleitstoff insbesondere Glaskohlenstoff ist. Die Zelldichte, also die Anzahl der Kanäle je Flächeneinheit beträgt 60 Zellen je Quadratzentimeter.

Das erste Filterelement 1 und das zweite Filterelement 2 sind separat voneinander ausgebildet und beabstandet voneinander in der Luftführung 4 montiert. Dabei ist das erste Filterelement 1 einströmseitig in der Luftführung 4 angeordnet und verhindert, dass partikelförmige Verunreinigungen in die Luftführung und in die Kabine der mobilen Einrichtung gelangen. Das zweite Filterelement 2 ist abströmseitig in der Luftführung 4 angeordnet und verhindert, dass unerwünschte gasförmige Begleitstoffe in die Kabine der mobilen Einrichtung gelangen.

Zur Belüftung der Kabine der mobilen Einrichtung weist die Luftführung 4 mehrere Ausströmer 5 auf. Dabei ist bei dem vorliegenden Ausführungsbeispiel jedem Ausströmer 5 ein zweites Filterelement 2 zugeordnet. Das zweite Filterelement 2, ausgebildet als Wabenkörper, bildet einen Strömungsgleichrichter und verringert Ausströmgeräusche in der Luftführung 4. Die mobile Einrichtung ist insbesondere ein Kraftfahrzeug.

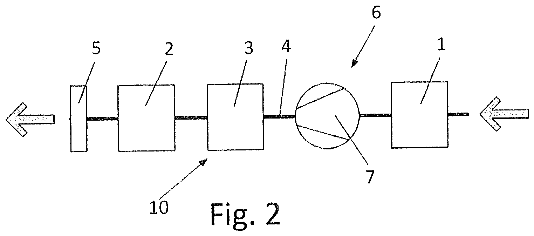

Figur 2 zeigt eine Luftführung 4 für mobile Einrichtungen mit einer Klimatisierungseinheit 6, einer Luftfördereinheit 7 und einer Filteranordnung 10 gemäß Figur 1.

Das erste Filterelement 1 ist in Strömungsrichtung betrachtet vor der Luftfördereinheit 7 angeordnet und das zweite Filterelement 2 ist in Strömungsrichtung betrachtet nach der Luftfördereinheit 7 angeordnet. Zwischen erstem Filterelement 1 und zweitem Filterelement 2 ist ferner noch ein Verdampfer der Klimatisierungseinheit 6 angeordnet.

Das erste Filterelement 1 ist als Vorfilter ausgebildet. Zwischen Luftfördereinheit 7 und zweitem Filterelement 2 ist ein drittes Filterelement 3 angeordnet. Dabei bildet das erste Filterelement 1 einen Grobfilter, das zweite Filterelement 2 einen Adsorptionsfilter und das dritte Filterelement 3 einen Feinfilter. Das dritte Filterelement 3 ist ebenso wie das erste Filterelement 1 als Faltenfilter ausgebildet und austauschbar in der Luftführung 4 angeordnet. Das zweite Filterelement 2 ist als Wabenfilter ausgebildet und umfasst Aktivkohle. Das zweite Filterelement 2 ist ebenfalls austauschbar in der Luftführung 4 angeordnet.

Das zweite Filterelement 2 in der Ausgestaltung als Wabenfilter bildet eine integrale Einheit mit dem Ausströmer 5 und kann dabei auch auf die Lebensdauer der mobilen Einrichtung ausgelegt sein.

## Patentansprüche

1. Filteranordnung (10) für eine mobile Einrichtung, umfassend zumindest ein erstes Filterelement (1) und ein zweites Filterelement (2), welche in einer Luftführung (4) der mobilen Einrichtung angeordnet sind, wobei das erste Filterelement (1) als Faltenfilter und das zweite Filterelement (2) als Adsorptionsfilter ausgebildet sind, wobei das erste Filterelement (1) und das zweite Filterelement (2) separat voneinander ausgebildet und beabstandet voneinander in der Luftführung (4) montiert sind, wobei das erste Filterelement (1) zumindest eine Lage aus einem Vliesstoff aufweist und wobei das zweite Filterelement (2) als Wabenfilter ausgebildet ist, umfassend eine Vielzahl von Kanälen (8), welche durch Kanalwände (9) begrenzt sind,
**dadurch gekennzeichnet,**
**dass** die Luftführung (4) zumindest einen Ausströmer (5) zur Belüftung einer Kabine der mobilen Einrichtung aufweist,
**dass** das zweite Filterelement (2) dem Ausströmer (5) zugeordnet ist und mit dem Ausströmer (5) eine funktionstechnische integrale Einheit bildet.

2. Filteranordnung nach Anspruch 1, **dadurch gekennzeichnet, dass** das zweite Filterelement (2) Aktivkohle umfasst.

3. Filteranordnung nach einem der Ansprüche 1 bis 2, **dadurch gekennzeichnet, dass** das zweite Filterelement (2) einen Strömungsgleichrichter bildet.

4. Luftführung (4) für mobile Einrichtungen, umfassend eine Klimatisierungseinheit (6), eine Luftfördereinheit (7) und eine Filteranordnung (10) nach einem der vorherigen Ansprüche.

5. Luftführung nach Anspruch 4, **dadurch gekennzeichnet, dass** zumindest ein Filterelement in Strömungsrichtung betrachtet vor der Luftfördereinheit (7) angeordnet ist und zumindest ein weiteres Filterelement in Strömungsrichtung betrachtet nach der Luftfördereinheit (7) angeordnet ist.

6. Luftführung nach Anspruch 4 oder 5, **dadurch gekennzeichnet, dass** das als Partikelfilter ausgebildete erste Filterelement (1) in Strömungsrichtung betrachtet vor der Luftfördereinheit (7) angeordnet ist und das als Adsorptionsfilter ausgebildete zweite Filterelement (2) nach der Luftfördereinheit (7) angeordnet ist.

7. Luftführung für mobile Einrichtungen nach einem der Ansprüche 4 bis 6, **dadurch gekennzeichnet, dass** das erste Filterelement (1) als Vorfilter ausgebildet ist.

8. Luftführung nach einem der Ansprüche 4 bis 7, **dadurch gekennzeichnet, dass** ein drittes Filterelement (3) vorgesehen ist.

9. Luftführung nach Anspruch 8, **dadurch gekennzeichnet, dass** das erste Filterelement (1) als Vorfilter, das zweite Filterelement (2) als Adsorptionsfilter und das dritte Filterelement (3) als Feinfilter ausgebildet ist.

## Claims

1. Filter arrangement (10) for a mobile device, comprising at least one first filter element (1) and one second filter element (2), which are arranged in an air guide (4) of the mobile device, wherein the first filter element (1) is formed as a folded filter, and the second filter element (2) is formed as an adsorption filter, wherein the first filter element (1) and the second filter element (2) are formed separately from one another and are fitted spaced apart from one another in the air guide (4), wherein the first filter element (1) has at least one nonwoven layer, and wherein the second filter element (2) is formed as a honeycomb filter comprising a multiplicity of channels (8) which are delimited by channel walls (9),
**characterized**
**in that** the air guide (4) has at least one vent (5) for ventilating a cabin of the mobile device,
and **in that** the second filter element (2) is assigned to the vent (5) and, together with the vent (5), forms a functional integral unit.

2. Filter arrangement according to Claim 1, **characterized in that** the second filter element (2) comprises activated carbon.

3. Filter arrangement according to one of Claims 1 and 2, **characterized in that** the second filter element (2) forms a flow straightener.

4. Air guide (4) for mobile devices, comprising an air-conditioning unit (6), an air delivery unit (7) and a filter arrangement (10) according to one of the preceding claims.

5. Air guide according to Claim 4, **characterized in that** at least one filter element is arranged before the air delivery unit (7) as viewed in the flow direction, and at least one further filter element is arranged after the air delivery unit (7) as viewed in the flow direction.

6. Air guide according to Claim 4 or 5, **characterized in that** the first filter element (1), which is formed as a particle filter, is arranged before the air delivery unit (7) as viewed in the flow direction, and the second filter element (2), which is formed as an adsorption filter, is arranged after the air delivery unit (7).

7. Air guide for mobile devices according to one of Claims 4 to 6, **characterized in that** the first filter element (1) is formed as a pre-filter.

8. Air guide according to one of Claims 4 to 7, **characterized in that** a third filter element (3) is provided.

9. Air guide according to Claim 8, **characterized in that** the first filter element (1) is formed as a pre-filter, the second filter element (2) is formed as an adsorption filter and the third filter element (3) is formed as a fine filter.

## Revendications

1. Arrangement de filtre (10) pour un dispositif mobile, comprenant au moins un premier élément filtrant (1) et un deuxième élément filtrant (2), lesquels sont disposés dans un conduit d'air (4) du dispositif mobile, le premier élément filtrant (1) et le deuxième élément filtrant (2) étant réalisés sous la forme de filtres d'adsorption, le premier élément filtrant (1) et le deuxième élément filtrant (2) étant configurés de manière à être séparés l'un de l'autre et étant montés de manière à être espacés l'un de l'autre dans le conduit d'air (4), le premier élément filtrant (1) possédant au moins une couche d'une étoffe nappée et le deuxième élément filtrant (2) étant réalisé sous la forme d'un filtre à alvéoles,
comportant une pluralité de canaux (8) qui sont délimités par des parois de canal (9),
**caractérisé en ce**
**que** le conduit d'air (4) possède au moins un diffuseur (5) destiné à la ventilation d'une cabine du dispositif mobile,
**que** le deuxième élément filtrant (2) est associé au diffuseur (5) et forme avec le diffuseur (5) une unité intégrale techniquement fonctionnelle.

2. Arrangement de filtre selon la revendication 1, **caractérisé en ce que** le deuxième élément filtrant (2) comporte des charbons actifs.

3. Arrangement de filtre selon l'une des revendications 1 et 2, **caractérisé en ce que** le deuxième élément filtrant (2) forme un redresseur d'écoulement.

4. Conduit d'air (4) pour dispositifs mobiles, comprenant une unité de climatisation (6), une unité de transport d'air (7) et un arrangement de filtre (10) selon l'une des revendications précédentes.

5. Conduit d'air selon la revendication 4, **caractérisé en ce qu'**au moins un élément filtrant est disposé avant l'unité de transport d'air (7), vue dans le sens de l'écoulement, et au moins un deuxième élément filtrant est disposé après l'unité de transport d'air (7), vue dans le sens de l'écoulement.

6. Conduit d'air selon la revendication 4 ou 5, **caractérisé en ce que** le premier élément filtrant (1), réalisé sous la forme d'un filtre à particules, est disposé avant l'unité de transport d'air (7), vue dans le sens de l'écoulement, et le deuxième élément filtrant (2), réalisé sous la forme d'un filtre d'adsorption, est disposé après l'unité de transport d'air (7), vue dans le sens de l'écoulement.

7. Conduit d'air pour dispositifs mobiles selon l'une des revendications 4 à 6, **caractérisé en ce que** le premier élément filtrant (1) est réalisé sous la forme d'un préfiltre.

8. Conduit d'air pour dispositifs mobiles selon l'une des revendications 4 à 7, **caractérisé en ce qu'**un troisième élément filtrant (3) est présent.

9. Conduit d'air selon la revendication 8, **caractérisé en ce que** le premier élément filtrant (1) est réalisé sous la forme d'un préfiltre, le deuxième élément filtrant (2) est réalisé sous la forme d'un filtre d'adsorption et le troisième élément filtrant (3) est réalisé sous la forme d'un filtre fin.
